# EUROPEAN PATENT SPECIFICATION

(11) **EP 0 511 681 B1**
(45) Date of publication and mention of the grant of the patent: **09.07.1997**
(21) Application number: 92107449.8
(22) Date of filing: 30.04.1992
(51) Int. Cl.: A41D 19/00

(54) **Gloves and methods of manufacturing the same**
Handschuhe und Verfahren zur Herstellung
Gants et leur procédé de fabrication

(30) Priority: 30.04.1991 JP 99194/91
(43) Date of publication of application: 04.11.1992
(73) Proprietor: SUMITOMO RUBBER INDUSTRIES LIMITED, Chuo-ku Kobe-shi Hyogo 651 (JP)
(72) Inventor: Sakaki, Toshiaki, Kakogawa-shi, Hyogo 675 (JP); Toji, Daijiro, Sungai Petani, Kedah (MY)
(74) Representative: Sajda, Wolf E., Dipl.-Phys.

(56) References cited:
- EP-A- 0 038 118
- DE-A- 2 603 015
- GB-A- 488 809
- US-A- 4 190 685

## Description

The present invention relates to a rubber glove, at least a portion of which comprises a lower rubber layer substantially comprising natural rubber and a top rubber layer substantially comprising acrylonitrile-butadiene rubber which forms a surface layer of the glove.

Generally, natural rubber which is economical and has a high strength, is mainly used as a material of gloves. However, the natural rubber is poor in oil resistance. On the other hand, gloves made of synthetic rubber, particularly acrylonitrile-butadiene rubber which is excellent in oil resistance, are advantageous in view of their resistance to organic solvents and oil. However, they have the disadvantages of being expensive and poor in strength and resistance to tearing.

The publication DE-A-2 603 015 discloses a conventional glove comprising a three-layer structure consisting of an acrylonitrile-butadiene mixed polymer forming a top surface, a natural rubber layer forming the lower layer and a bonding agent layer provided between the top surface layer and the lower layer. In this conventional glove it is essential that the intermediate layer has an excellent capacity for bonding the top surface layer and the lower layer to each other. For this purpose it is essential that the intermediate bonding layer is well compatible with both the top surface layer and the lower layer and provides an excellent adhesive capacity with respect to acrylonitrile-butadiene rubber and natural rubber.

Throughout the specification of the document DE-A-2 603 015 emphasis is put on the feature that the intermediate bonding agent is necessary in order to obtain the gloves of interest. The intermediate bonding agent layer is applied in a second step of the method according to this document and explained in detail in this specification. Moreover, it is explained in this document that after applying the first layer to the glove mold, the mold body obtained thereby together with the applied first layer is dried at room temperature or an increased temperature in air.

The publication US-A-4 190 685 relates to a chemical resistant article, in particular a glove which has the properties of good strength, providing adequate chemical protection, in particular high resistance to toxic chemicals. In the glove and the method according to that publication, a surface layer is used which consists of butyl rubber. Also, in the method described in US-A-4 190 685, after forming the glove mold, several dipping and drying steps are used in order to produce the first layer, and further dipping and drying steps are used to form a second layer, wherein the number of steps in making each layer depends on the total thickness required.

In the method according to US-A-4 190 685 the second layer is not applied to the first layer when the first layer is still in a wet condition and has not fully dried. Rather, it is essential in the conventional method that further to dipping the corresponding butyl rubber film is subject to air drying and subsequent oven drying before the steps for the next layer are carried out.

The object underlying the present invention is to provide economical gloves which are excellent in strength, oil resistance and solvent resistance, and also to provide a method of manufacturing such gloves.

To achieve the object specified above, the rubber glove according to the invention has a laminated structure, at least a portion of which comprises a lower rubber layer substantially comprising natural rubber and a top surface rubber layer substantially comprising acrylonitrile-butadiene rubber which forms a surface layer of the glove, wherein the top rubber layer is laminated on the surface of the coating of the lower layer, and wherein the top rubber layer has a thickness in the range from 0,03 to 0,1 mm and the thickness of the lower rubber layer is in the range from 0,3 to 2 mm.

According to a further development of the glove according to the invention, the top rubber layer contains particles forming non-slip projections.

According to a first aspect, a glove manufacturing method according to the invention comprises the following steps:
Immersing a heated glove mold in natural rubber latex, wherein the natural rubber latex comprises a heat-sensitive coagulant, thereby to form a lower layer on the surface of the mold; and
immersing at least a part of the lower layer in a second rubber latex substantially comprising acrylonitrile-butadiene rubber latex before the lower layer has fully dried, such that the lower layer contains water when the lower layer is immersed in the second rubber latex, thereby to laminate, on the surface of the lower layer, a top rubber layer substantially comprising acrylonitrile-butadiene rubber, such that the lower rubber layer is directly in contact with the top rubber layer.

According to a second aspect, a glove manufacturing method according to the invention comprises the following steps:
Immersing a heated glove mold with a glove body of a knitted, woven or unwoven fabric mounted thereon, in natural rubber latex, wherein the natural rubber latex comprises a heat-sensitive coagulant, thereby to form a lower rubber layer on the surface of the glove mold; and
immersing at least a part of the lower rubber layer in a second rubber latex substantially comprising acrylonitrile-butadiene rubber latex, before the lower rubber layer has fully dried, such that the lower layer contains water when the lower layer is immersed in the second rubber latex, thereby to laminate, on the surface of the lower layer, a top rubber layer substantially comprising acrylonitrile-butadiene rubber, such that the lower layer is directly in contact with the top surface layer.

According to a further development of the method according to the invention, the water content of the rubber latex of the top rubber layer is in a range from 30 to 70% by weight.

According to a further development of the method according to the invention, polyurethane powder, polyvinylchloride powder or a filler, such as calcium carbonate or silica is dispersed in the rubber latex of the top rubber layer in order to form non-slip projections on the surface of a glove.

In a specific embodiment of the method according to the invention, a thickening agent is added to the rubber latex of the top rubber layer in order to increase the viscosity thereof.

According to a still further development of the method according to the invention, the lower rubber layer is coated by immersing up to a thickness in the range from 0,3 to 2 mm, and the top rubber layer is coated by immersing up to a thickness in the range from 0,03 to 0,1 mm.

The invention will be described in more detail with reference to preferred embodiments and the accompanying drawings.

### Brief Description of the Drawings

- Figure 1: is a plan view of glove in accordance with an embodiment of the present invention;
- Figure 2: is a section view of a laminated part of the glove in accordance with the present invention; and
- Figure 3: is a schematic view illustrating the outline of a heat-sensitive method using rubber latex containing a heat-sensitive coagulant in accordance with the present invention.

### Detailed Description of the Invention

According to the present invention, an acrylonitrile-butadiene rubber layer is used as an oil-resistant rubber layer forming the top surface layer.

According to the preferred embodiment of the present invention, the rubber layers comprise two layers, i.e., a natural rubber layer as the lowermost layer and an acrylonitrile-butadiene rubber layer as the top surface layer.

Examples of the latex immersion method used in manufacturing the gloves of the present invention include, in addition to a film-forming method by mere immersion into rubber latex, a coagulation method in which rubber particles are coagulated with the use of static electricity, a heat-sensitive method using rubber latex containing a heat-sensitive coagulant, and the like.

According to the coagulation method, cations (calcium ions and the like) are sticked to the surface of a glove mold, which is then immersed into rubber latex. Rubber particles in the latex which are negatively electrically charged, are attracted by the cations and coagulated on the mold surface, thereby forming a rubber layer. Then, the mold is pulled out from the latex, and dried and vulcanized to form a rubber film.

According to the heat-sensitive method, a previously heated mold is immersed into rubber latex containing a heat-sensitive coagulant, so that the latex containing a heat-sensitive coagulant is gelled on the mold surface. Then, the mold is pulled out from the latex, and dried and vulcanized in order to obtain a glove.

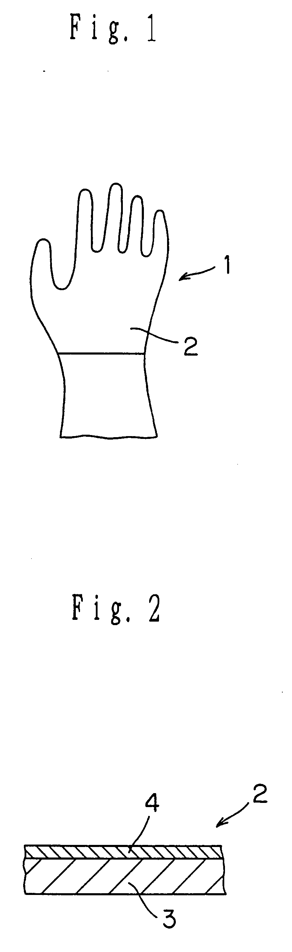

In Fig. 1, a glove 1 has a laminated part 2 at the hand portion except for the wrist portion. Fig. 2 shows a sectional view of the structure of the laminated part 2, in which a surface layer 4 is laminated on the lower rubber layer 3 which forms a film of the glove 1. A natural rubber layer may be used as the lower layer 3, and an oil-resistant rubber layer, particularly an acrylonitrile-butadiene rubber layer, is used as the surface layer 4 to improve the glove in its oil resistance and solvent resistance. The lower layer 3 may be formed by a coagulation method or a heat-sensitive method.

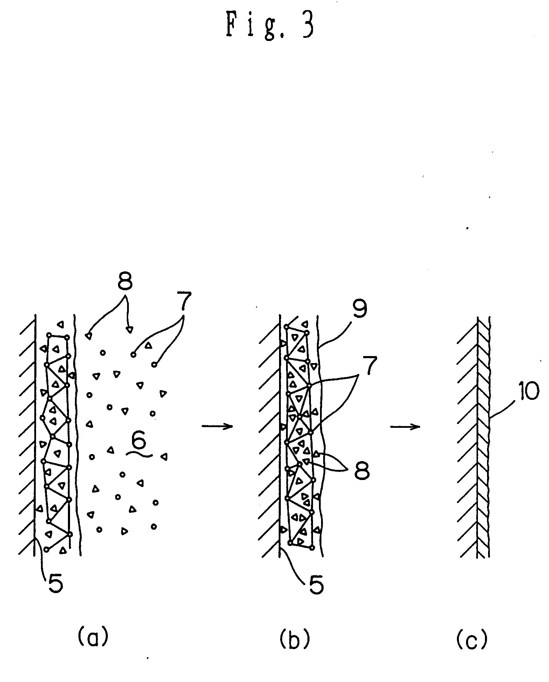

Figs. 3 (a) to (c) are schematic views illustrating the outline of the heat-sensitive method. Fig. 3 (a) shows a step where a heat-sensitive coagulant 7 is coagulated onto the surface of a mold 5 immersed into rubber latex 6, thus forming a net-like structure in which rubber particles 8 are incorporated. Fig. 3 (b) shows a step where the mold 5 has been pulled out from the latex 6 with a great amount of water contained in a film 9. When the film 9 has been dried, there is formed a dry film 10 containing the heat-sensitive coagulant 7 as shown in Fig. 3 (c).

Examples of the heat-sensitive coagulant which can be used in the present invention include polymer-type coagulants such as polyvinyl methyl ether, polyalkylene glycol, polyether polyformal, functional polysiloxane and the like, and also include a variety of zinc ammonium complex salts, sodium silicofluoride, ammonium nitrate, ammonia zinc acetate, diphenyl guanidine, trypsin, triacetin, nitromethane, nitropropane, zinc salt of 2-mercaptobenzothiazole, 2-mercaptobenzoimidazole, 4,5-methyl mercaptobenzoimidazole and the like.

The blending ratio of the heat-sensitive coagulant in the rubber latex is suitably in a range from 0,5 to 5 parts by weight for 100 parts by weight of the rubber component. The rubber latex contains, in addition to such a heat-sensitive coagulant, a variety of known additives such as a vulcanizer, a stabilizer and the like.

The mold pre-heating temperature can be suitably determined according to the heat-sensitive coagulant and rubber materials to be used. Generally, the mold is pre-heated to about 100°C.

For laminating different types of rubbers, as shown in Fig. 2 the lower layer 3 may be formed first by the heat-sensitive method and then immersed into another rubber latex different from that used for forming the lower layer 3 or such a different rubber latex is applied to the lower layer 3, thereby to form the surface layer 4. To improve the adhesion between the layers 3, 4, such immersion into or application with the different rubber latex is preferably conducted on the lower layer 3 which has just been pulled out from the rubber latex or has been dried to such an extent that the lower layer 3 contains water; that is, the lower layer 3 is still in the form of the film 9 in Fig. 3 (b). The reason why the adhesion is improved, is not apparent. However, it is presumed that, since the film 9 obtained by the heat-sensitive method contains a great amount of water when the film 9 is in a gelled state, the rubber components of the both layers 3, 4 are mixed with each other at the interfaces thereof so that the rubber molecules are entangled with one another, when the surface layer 4 is formed.

The surface layer 4 can be formed by merely immersing the lower layer 3 into rubber latex. In the lamination of natural rubber and acrylonitrile-butadiene rubber mentioned above, the thickness of the natural rubber layer forming the lower layer 3 may be in a range from about 0,3 to about 2,0 mm, and the thickness of the acrylonitrile-butadiene rubber layer forming the surface layer 4 may be in a range from about 0,03 to about 0,10 mm. When the surface layer 4 is as thin as in the range mentioned above, the surface layer 4 can be formed by merely immersing the lower layer 3 into rubber latex containing no heat-sensitive coagulant.

After the surface layer 4 has been formed, the layers 3, 4 are dried and then vulcanised to obtain the glove 1 of the present invention. It is required to vulcanize the layers 3, 4 when they have been dried. If the layers 3, 4 are suddenly heated without having been dried, this involves the likelihood that the layers 3, 4 partially come off or separate from each other.

The rubber latex for forming the surface layer 4 can be used singly. To form non-slip projections on the surface of a working glove, it is possible to disperse, in the rubber latex, polyurethane powder, polyvinyl chloride powder or a filler such as calcium carbonate, silica or the like. A known thickening agent may be added to increase the latex in its viscosity. This measure will not only thicken the film, but also restrain the powder from precipitating. Pigments may also be added if necessary.

The water content of the rubber latex for forming the surface layer 4 has a great influence upon the adhesion between the lower layer 3 and the surface layer 4. More specifically, if the entire solid content of the rubber latex for forming the surface layer 4 (the total amount of rubber content, polyurethane powder and the like) is below 30 % by weight, the adhesion is greatly lowered. Accordingly, the water content of the rubber latex for forming the surface layer 4 is preferably in a range from 30 to 70 % by weight, and more preferably from 30 to 65 % by weight. It is required that the water content of the rubber latex for forming the surface layer 4 is higher than the water content of the rubber latex for forming the lower layer 3. When the lower layer 3 is made of natural rubber, the water content of the natural rubber latex is suitably in a range from about 40 to 60 % by weight.

Examples of the latex of acrylonitrile-butadiene rubber include "LX520B" manufactured by Nippon Zeon Co., Ltd., "Butofan LN426C" manufactured by BASF and the like.

The gloves of the present invention can be applied both as household gloves and working gloves. The term "household gloves" generally refers to gloves made of rubber alone and gloves made of rubber and cotton, rayon or the like serving as fluff. The term "working gloves" is used in contrast with the term "household gloves". In a working glove, the entire surface of glove made of a knitted, woven or unwoven fabric is coated with a rubber layer, and the surface of the rubber layer from the finger tips to the wrist has projections. However, this is a classification for convenience' sake and there is no relationship between the actual applications and such terms.

It is a matter of course that, according to the present invention, the laminated part 2 may be formed on the entire glove, instead of on a part of the glove.

### Examples

The following description will discuss in detail the present invention with reference to Examples thereof. However, the present invention should not be limited to the Example set forth in the following.

### Example

A glove mold was covered with a glove made of a knitted fabric (hereinafter referred to as knitted glove) with a minimum distance therebetween. The glove mold and the knitted glove were previously heated to about 100°C and then immersed into natural rubber latex having the following composition, by a depth of about 25 to 30 cm from the glove finger tips, so that a lower layer of natural rubber was formed on the surface of the knitted glove.

| Component | Dry Parts by Weight |
|---|---|
| High ammonia latex | 100 |
| 10%-Casein solution (containing 5%-ammonia) | 0,1 |
| 10%-Potassium hydroxide solution | 0,4 |
| Acid | (Dropped until the pH reached 8) |
| Vulcanizer (sulfur) *1) | 1 |
| Zinc oxide *1) | 1 |
| Vulcanizing accelerator *2) | 0,6 |
| Polyvinyl methyl ether *3) | 1 |

| | |
|---|---|
| *1): Each of the sulfur and the zinc oxide was added in the form of an aqueous dispersion of which solid content was 50%. | |
| *2): A 45% aqueous solution of dibutyldithiocarbamate sodium salt | |
| *3): A heat-sensitive coagulant. | |

The resulting glove was immersed, at its portion from the finger tips to the wrist, into latex of acrylonitrile-butadiene rubber having the following composition. Thus, the lower layer of natural rubber and a surface layer of acrylonitrile-butadiene rubber were laminated on the surface of the knitted glove.

| Component | Dry Parts by Weight |
|---|---|
| Polyurethane powder (particle size of 0,2 mm) | 25 |
| 20%-Emulvin W aqueous solution *4) | 6,5 |
| LX520B *5) | 75 |
| Water | (Added such that the entire solid content was equal to 35%) |

| | |
|---|---|
| *4): Emulsifier manufactured by Bayer, Diluted to 1/5 at ratio by weight | |
| *5): Trade name of latex of acrylonitrile-butadiene rubber (the solid content of which was 40%) manufactured by Nippon Zeon Co., Ltd. | |

The resulting glove was dried at room temperature for a few minutes and then vulcanized in an oven at 120°C for 30 minutes. After vulcanization, the glove together with the knitted glove was removed from the mold, thus obtaining a working glove. This glove in which the lower layer and the surface layer were sticked to each other with high adhesion, was sufficient to be used in practice.

This glove was provided on the surface of the laminated part thereof with projections produced by the polyurethane particles blended with the latex of acrylonitrile-butadiene rubber. In this glove, the thickness of the lower layer (natural rubber layer) was 1,0 mm, while the thickness of the surface layer (acrylonitrile-butadiene rubber layer) except for the projections was 0,05 mm.

The glove (A) thus prepared according to the method abovementioned was compared with a glove (B) in which both the surface and lower layers were made of natural rubber.

### (1) Cost

Since the manufacturing steps for the gloves (A) and (B) are substantially the same, the difference in production cost between the gloves (A) and (B) resides in material cost only. In the glove (A), the acrylonitrile-butadiene rubber layer is very thin, so that increase in material cost is very small. Accordingly, the gloves (A) and (B) are not substantially different in production cost from each other.

### (2) Actual Usage

Comparison was made on the gloves (A) and (B) which had been used on an oil-handling job in a glove manufacturing factory for one month. The glove (B) presented partial swelling, separation from the knitted layer, damages to the rubbers and the like. On the other hand, the glove (A) of Example did not present any such abnormal phenomena.

## Claims

1. A rubber glove, at least a portion of which comprises a lower rubber layer (3) substantially comprising natural rubber and a top rubber layer (4) substantially comprising acrylonitrile-butadiene rubber which forms a surface layer of the glove (1),
wherein the top rubber layer (4) is laminated on the surface of the coating of the lower rubber layer (3),
and wherein the top rubber layer (4) has a thickness in the range from 0,03 to 0,1 mm and the thickness of the lower rubber layer (3) is in the range from 0,3 to 2 mm.

2. The glove according to claim 1,
wherein the top rubber layer (4) contains particles forming non-slip projections.

3. A glove manufacturing method comprising the following steps:
- immersing a heated glove mold (5) in natural rubber latex (6), wherein the natural rubber latex (6) comprises a heat-sensitive coagulant (7), thereby to form a lower layer (3) on the surface of the mold (5); and
- immersing at least a part of the lower rubber layer (3) in a second rubber later substantially comprising acrylonitrile-butadiene rubber latex before the lower layer (3) has fully dried, such that the lower rubber layer (3) contains water when the lower rubber layer (3) is immersed in the second rubber latex, thereby to laminate, on the surface of the lower layer (3), a top rubber layer (4) substantially comprising acrylonitrile-butadiene rubber, such that the lower rubber layer (3) is directly in contact with the top rubber layer (4).

4. A glove manufacturing method comprising the following steps:
- immersing a heated glove mold (5) with a glove body of a knitted, woven or unwoven fabric mounted thereon, in natural rubber latex (6), wherein the natural rubber latex (6) comprises a heat-sensitive coagulant (7), thereby to form a lower rubber layer (3) on the surface of the glove mold (5); and
- immersing at least a part of the lower rubber layer (3) in a second rubber latex substantially comprising acrylonitrile-butadiene rubber latex before the lower rubber layer (3) has fully dried, such that the lower rubber layer (3) contains water when the lower rubber layer (3) is immersed in the second rubber latex, thereby to laminate, on the surface of the lower rubber layer (3), a top rubber layer (4) substantially comprising acrylonitrile-butadiene rubber, such that the lower rubber layer (3) is directly in contact with the top rubber layer (4).

5. The glove manufacturing method according to claim 3 or 4,
wherein the water content of the rubber latex of the top rubber layer (4) is in a range from 30 to 70 % by weight.

6. The glove manufacturing method according to any of claims 3 to 5,
wherein polyurethane powder, polyvinylchloride powder or a filler, such as calcium carbonate or silica is dispersed in the rubber latex of the top rubber layer (4) in order to form non-slip projections on the surface of a glove.

7. The glove manufacturing method according to any of claims 3 to 6,
wherein a thickening agent is added to the rubber latex of the top rubber layer (4) in order to increase the viscosity thereof.

8. The glove manufacturing method according to any of claims 3 to 7,
wherein the lower rubber layer (3) is coated by immersing up to a thickness in the range from 0,3 to 2 mm, and the top rubber layer (4) is coated by immersing up to a thickness in the range from 0,03 to 0,1 mm.

## Patentansprüche

1. Gummihandschuh, von dem wenigstens ein Bereich folgendes aufweist: eine untere Gummischicht (3), die im wesentlichen Naturkautschuk aufweist, und eine obere Gummischicht (4), die im wesentlichen Acrylnitril-Butadien-Kautschuk aufweist und eine Oberflächenschicht des Handschuhs (1) bildet,
wobei die obere Gummischicht (4) auf die Oberfläche der Beschichtung der unteren Gummischicht (3) laminiert ist,
und wobei die obere Gummischicht (4) eine Dicke in dem Bereich von 0,03 bis 0,1 mm hat und die Dicke der unteren Gummischicht (3) in dem Bereich von 0,3 bis 2 mm liegt.

2. Handschuh nach Anspruch 1,
wobei die obere Gummischicht (4) Partikel enthält, die Antirutschvorsprünge bilden.

3. Verfahren zum Herstellen eines Handschuhs, das die folgenden Schritte aufweist:
- Eintauchen einer erwärmten Handschuhform (5) in Naturkautschuklatex (6), wobei der Naturkautschuklatex (6) ein wärmeempfindliches Koagulans (7) aufweist, so daß dadurch auf der Oberfläche der Form (5) eine untere Schicht (3) gebildet wird; und
- Eintauchen von wenigstens einem Teil der unteren Gummischicht (3) in einen zweiten Kautschuklatex, der im wesentlichen Acrylnitril-Butadien-Kautschuklatex aufweist, bevor die untere Schicht (3) vollständig getrocknet ist, so daß die untere Gummischicht (3) Wasser enthält, wenn die untere Gummischicht (3) in den zweiten Kautschuklatex eingetaucht wird, so daß dadurch auf die Oberfläche der unteren Schicht (3) eine obere Gummischicht (4) laminiert wird, die im wesentlichen Acrylnitril-Butadien-Kautschuk aufweist, so daß die untere Gummischicht (3) in direktem Kontakt mit der oberen Gummischicht (4) ist.

4. Verfahren zum Herstellen eines Handschuhs, das die folgenden Schritte aufweist:
- Eintauchen einer erwärmten Handschuhform (5) mit einem daran befindlichen Handschuhkörper aus einem gewirkten, gewebten oder nichtgewebten textilen Flächengebilde in Naturkautschuklatex (6), wobei der Naturkautschuklatex (6) ein wärmeempfindliches Koagulans (7) aufweist, so daß dadurch auf der Oberfläche der Handschuhform (5) eine untere Gummischicht (3) geformt wird; und
- Eintauchen von wenigstens einem Teil der unteren Gummischicht (3) in einen zweiten Kautschuklatex, der im wesentlichen Acrylnitril-Butadien-Kautschuklatex aufweist, bevor die untere Gummischicht (3) vollständig getrocknet ist, so daß die untere Gummischicht (3) Wasser enthält, wenn die untere Gummischicht (3) in den zweiten Kautschuklatex eingetaucht wird, so daß dadurch auf die Oberfläche der unteren Gummischicht (3) eine obere Gummischicht (4) laminiert wird, die im wesentlichen Acrylnitril-Butadien-Kautschuk aufweist, so daß die untere Gummischicht (3) in direktem Kontakt mit der oberen Gummischicht (4) ist.

5. Verfahren zum Herstellen eines Handschuhs nach Anspruch 3 oder 4,
wobei der Wassergehalt des Kautschuklatex der oberen Gummischicht (4) in einem Bereich von 30 bis 70 Gew.-% liegt.

6. Verfahren zum Herstellen eines Handschuhs nach einem der Ansprüche 3 bis 5,
wobei Polyurethanpulver, Polyvinylchloridpulver oder ein Füllstoff, wie z.B. Calciumcarbonat oder Silica, in dem Kautschuklatex der oberen Gummischicht (4) dispergiert ist, um an der Oberfläche eines Handschuhs Antirutschvorsprünge zu bilden.

7. Verfahren zum Herstellen eines Handschuhs nach einem der Ansprüche 3 bis 6,
wobei dem Kautschuklatex der oberen Gummischicht (4) ein Verdickungsmittel zugefügt wird, um dessen Viskosität zu erhöhen.

8. Verfahren zum Herstellen eines Handschuhs nach einem der Ansprüche 3 bis 7,
wobei die untere Gummischicht (3) durch Tauchbeschichten bis zu einer Dicke in dem Bereich von 0,3 bis 2 mm aufgebracht wird und die obere Gummischicht (4) durch Tauchbeschichten bis zu einer Dicke in dem Bereich von 0,03 bis 0,1 mm aufgebracht wird.

## Revendications

1. Gant en caoutchouc dont au moins une partie comprend une couche inférieure de caoutchouc (3) constituée essentiellement de caoutchouc naturel, et une couche supérieure de caoutchouc (4) constituée essentiellement de caoutchouc à base d'acrylonitrile-butadiène, qui forme une couche superficielle du gant (1), dans lequel la couche supérieure de caoutchouc (4) est stratifiée sur la surface d'un revêtement de la couche inférieure de caoutchouc (3), et dans lequel la couche supérieure de caoutchouc (4) a une épaisseur comprise entre 0,03 et 0,1 mm, et l'épaisseur de la couche inférieure de caoutchouc (3) est comprise entre 0,3 et 2 mm.

2. Gant selon la revendication 1, dans lequel la couche supérieure de caoutchouc (4) contient des particules formant des projections antidérapantes.

3. Procédé de fabrication d'un gant comprenant les étapes suivantes :
- immerger un moule à gants chauffé (5) dans un latex de caoutchouc naturel (6), ledit latex de caoutchouc naturel (6) comprenant un coagulant (7) sensible à la chaleur, pour former ainsi une couche inférieure (3) sur la surface du moule (5) ; et
- immerger au moins une partie de la couche inférieure de caoutchouc (3) dans un second latex de caoutchouc constitué essentiellement de latex de caoutchouc à base d'acrylonitrile-butadiène, avant le séchage complet de la couche inférieure (3), de telle façon que la couche inférieure de caoutchouc (3) contienne de l'eau quand cette couche inférieure de caoutchouc (3) est immergée dans le second latex de caoutchouc, de façon à stratifier ainsi, sur la surface de la couche inférieure (3), une couche supérieure de caoutchouc (4) constituée essentiellement de caoutchouc à base d'acrylonitrile-butadiène, de telle façon que la couche inférieure de caoutchouc (3) soit directement au contact de la couche supérieure de caoutchouc (4).

4. Procédé de fabrication d'un gant comprenant les étapes suivantes :
- immerger un moule à gants chauffé (5), avec un corps de gant en tissu à mailles, en tissé ou non-tissé monté sur celui-ci, dans un latex de caoutchouc naturel (6), ledit latex de caoutchouc naturel (6) comprenant un coagulant (7) sensible à la chaleur, pour former ainsi une couche inférieure de caoutchouc (3) sur la surface du moule à gants (5) ; et
- immerger au moins une partie de la couche inférieure de caoutchouc (3) dans un second latex de caoutchouc constitué essentiellement d'un latex de caoutchouc à base d'acrylonitrile-butadiène, avant le séchage complet de la couche inférieure de caoutchouc (3), de telle façon que la couche inférieure de caoutchouc (3) contienne de l'eau quand cette couche inférieure de caoutchouc (3) est immergée dans le second latex de caoutchouc, de façon à stratifier ainsi, sur la surface de la couche inférieure de caoutchouc (3), une couche supérieure de caoutchouc (4) constituée essentiellement de caoutchouc à base d'acrylonitrile-butadiène, de telle façon que la couche inférieure de caoutchouc (3) soit directement au contact de la couche supérieure de caoutchouc (4).

5. Procédé de fabrication d'un gant selon la revendication 3 ou 4, dans lequel la teneur en eau du latex de caoutchouc de la couche supérieure de caoutchouc (4) est comprise entre 30 et 70 % en poids.

6. Procédé de fabrication d'un gant selon l'une quel-conque des revendications 3 à 5, dans lequel on disperse une poudre de polyuréthane, une poudre de chlorure de polyvinyle ou une charge, comme le carbonate de calcium ou la silice, dans le latex de caoutchouc de la couche supérieure de caoutchouc (4) de façon à former des projections anti-dérapantes sur la surface d'un gant.

7. Procédé de fabrication d'un gant selon l'une quel-conque des revendications 3 à 6, dans lequel on ajoute un agent épaississant au latex de caoutchouc de la couche supérieure de caoutchouc (4) de façon à augmenter la viscosité de celui-ci.

8. Procédé de fabrication d'un gant selon l'une quel-conque des revendications 3 à 7, dans lequel la couche inférieure de caoutchouc (3) est appliquée par immersion jusqu'à l'obtention d'une épaisseur comprise entre 0,3 et 2 mm, et la couche supérieure de caoutchouc (4) est appliquée par immersion jusqu'à l'obtention d'une épaisseur comprise entre 0,03 et 0,1 mm.
